# FASCICULE DE BREVET EUROPEEN

(11) **EP 3 164 616 B1**
(45) Date de publication et mention de la délivrance du brevet: **02.01.2019**
(21) Numéro de dépôt: 15753080.9
(22) Date de dépôt: 24.06.2015
(51) Int. Cl.: F16D 23/02, F16D 23/06

(54) **SYNCHRONISEUR DE BOÎTE DE VITESSES, À FLASQUE CANNELÉ POUR LA TRANSLATION DU MOYEU**
SYNCHRONGETRIEBE MIT EINEM KERBVERZAHNTEN FLANSCH FÜR DIE TRANSLATORISCHE BEWEGUNG DER NABE
GEARBOX SYNCHROMESH, WITH A SPLINED FLANGE FOR THE TRANSLATIONAL MOVEMENT OF THE HUB

(30) Priorité: 01.07.2014 FR 1456251
(43) Date de publication de la demande: 10.05.2017
(73) Titulaire: Technoboost, 75116 Paris (FR)
(72) Inventeur: WASCHEUL, Michael, F-78260 Achères (FR); RENAULT, Aurélien, F-78760 Jouars Pontchartrain (FR); GIANNONI, Marc, F-75009 Paris (FR)
(74) Mandataire: Fernandez, Francis Lionel
(86) Numéro de dépôt international: PCT/FR2015/051691
(87) Numéro de publication internationale: WO 2016/001527

(56) Documents cités:
- FR-A- 1 082 228
- FR-A1- 2 884 881
- US-A- 2 443 597

## Description

L'invention concerne les boîtes de vitesses qui équipent certains systèmes, comme par exemple certains véhicules, éventuellement de type automobile, et plus précisément les synchroniseurs que comprennent certaines de ces boîtes de vitesses.

Comme le sait l'homme de l'art, une boîte de vitesses comprend généralement au moins un arbre primaire, au moins un arbre secondaire, au moins un synchroniseur, au moins une fourchette associée à un synchroniseur, et au moins un actionneur de fourchette. Chaque arbre primaire et l'arbre secondaire associé sont munis respectivement de pignons fixes et de pignons fous destinés à définir ensemble des rapports (ou vitesses).

Chaque actionneur est chargé de déplacer une fourchette afin qu'elle induise un déplacement d'une partie d'un synchroniseur, pouvant en partie se translater sur un arbre secondaire, afin de provoquer le couplage en rotation de cet arbre secondaire avec l'arbre primaire associé, via un pignon fou de cet arbre secondaire.

Chaque synchroniseur, tel que celui présenté par exemple dans le document FR2884881-A1, peut comprendre au moins :
- un moyeu solidarisé en rotation à l'arbre secondaire grâce à des cannelures internes coopérant avec des cannelures externes de cet arbre secondaire,
- un manchon (ou baladeur) monté en translation sur le moyeu,
- une bague de synchronisation comprenant une partie conique femelle propre à être couplée à une partie conique mâle d'une couronne à crabots d'un pignon fou, et
- un mécanisme d'armement installé entre une face interne du manchon et une face externe du moyeu, et destiné à translater la bague de synchronisation pour la coupler à la couronne à crabots du pignon fou lorsque le manchon est translaté par la fourchette associée.

Chaque manchon est propre à être translaté après avoir décalé angulairement la bague de synchronisation associée lors d'une phase généralement dite de « dévirage », afin d'être couplé, lors d'une phase généralement dite de « crabotage », au pignon fou qui a été préalablement synchronisé par la bague de synchronisation lors d'une phase généralement dite de « synchronisation ». Le couplage d'une bague de synchronisation à un pignon fou est destiné à synchroniser la vitesse de rotation de ce dernier sur celle de l'arbre secondaire qui le porte, et le couplage d'un manchon à ce même pignon fou est destiné à solidariser temporairement en rotation ce dernier à l'arbre secondaire qui le porte.

Chaque actionneur comprend une came dont la rotation provoque la translation d'une fourchette, et donc du manchon d'un synchroniseur. Cette came présente une hauteur qui doit permettre d'assurer systématiquement le passage d'un rapport (ou vitesse), sans coincement avant la fin de course. Cette hauteur dépend directement de la course du manchon et doit être ajustée au mieux afin de garantir une marge de distance (ou translation) minimale en prise mdm.

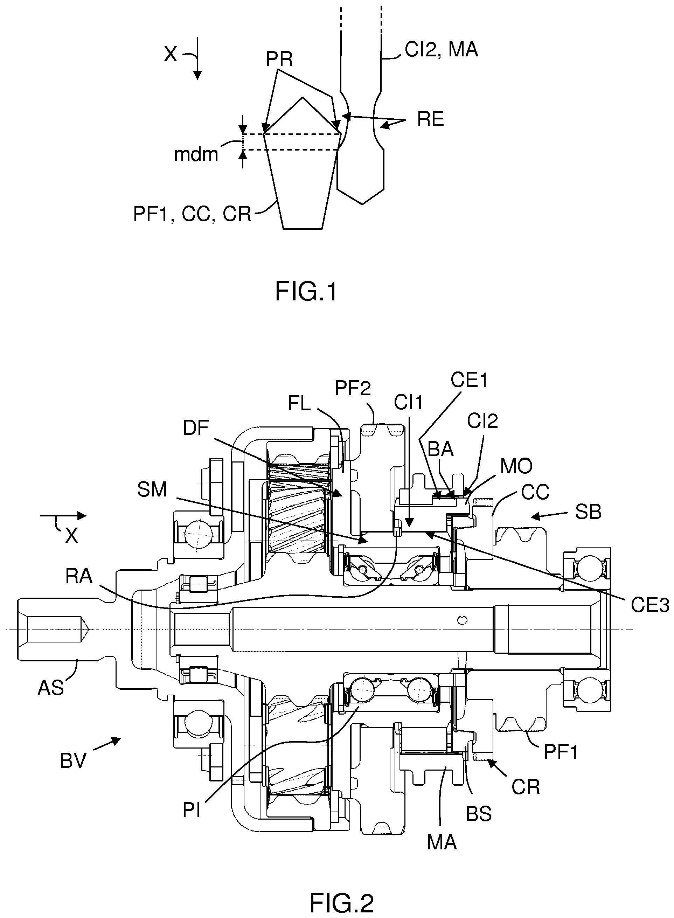

Comme illustré sur la figure 1, cette dernière (mdm) est prédéfinie de manière à ce que puisse survenir un couplage étroit des cannelures internes CI2 du manchon MA aux crabots CR de la couronne à crabots CC du pignon fou PF1, compte tenu des variations dimensionnelles de fabrication du manchon MA, de la bague de synchronisation et du pignon fou PF1. Plus précisément, les cannelures internes CI2 du manchon MA comprennent des dents d'extrémité comportant des renfoncements dits « anti-lâcher » RE dans lesquels doivent venir se loger des protubérances PR définies à l'intersection entre des dièdres constituant des crabots CR de la couronne à crabots CC, pour garantir l'engagement effectif du pignon fou PF1. La marge de distance (ou translation) minimale en prise mdm est alors définie comme la distance minimale à respecter entre l'extrémité avant d'un renfoncement anti-lâcher RE et l'intersection des dièdres, lorsque le rapport est engagé et que le manchon MA a recouvert la couronne à crabots CC.
La hauteur de came dépend de l'architecture de la boîte de vitesses et des synchroniseurs à commander (nombre de cônes, angularité des extrémités de dents ou crabots). Par conséquent, pour une même rampe d'actionneur destinée à commander tous les synchroniseurs, la détermination des chaines de cotes s'avère complexe pour éviter les problèmes de trainée et de « chauffe » des synchroniseurs. Il est rappelé que les phénomènes de trainée de boîte de vitesses sont maitrisés lorsque la chaine de cotes de jeu du pignon fou est typiquement comprise entre environ 0,06 mm et 0,3 mm.

La gestion de la hauteur de cette came s'avère donc difficile à réaliser pour les boîtes de vitesses qui sont fabriquées en grande série, par exemple pour des véhicules de tourisme, en raison principalement des tolérances dimensionnelles de fabrication serrées et de l'harmonisation des chaines de cotes des synchroniseurs à commander. En effet, s'il est possible d'accomplir un appairage précis des fourchettes par usinage ou par ajustement à l'aide de cales d'épaisseur pour une boîte de vitesses de compétition, cela devient impossible à réaliser pour une boîte de vitesses de série du fait des coûts, du temps de contrôle et de la précision de la métrologie.

On notera que cette gestion s'avère d'autant plus difficile à réaliser lorsque l'on réduit les dimensions des boîtes de vitesses pour les rendre plus compactes.

L'invention a donc notamment pour but d'améliorer la situation.

Elle propose notamment à cet effet un synchroniseur, destiné à équiper une boîte de vitesses comprenant au moins un arbre secondaire, et comportant un moyeu couplé en rotation à cet arbre secondaire et un manchon comprenant des cannelures internes et propre à être translaté par rapport à ce moyeu afin que ses cannelures internes soient couplées étroitement à des crabots d'un pignon fou participant à la définition d'au moins un rapport.

Ce synchroniseur se caractérise par le fait :
- qu'il comprend également un flasque comportant un sous-moyeu solidarisé à son arbre secondaire et muni de cannelures externes, et
- que son moyeu comprend des cannelures internes propres à coopérer avec les cannelures externes du sous-moyeu pour permettre une translation par rapport à ce dernier qui est propre à garantir le couplage étroit des cannelures internes du manchon aux crabots avec une marge de translation minimale, indépendamment de variations dimensionnelles de fabrication du manchon et du pignon fou.

Grâce au jeu de translation offert par la liaison coulissante cannelée entre le moyeu et le sous-moyeu, le moyeu peut être plaqué efficacement sur la partie du pignon fou qui comprend les crabots, sans risque d'échappement et en évitant le blocage ou coincement du doigt de la fourchette dans l'actionneur.

Le synchroniseur selon l'invention peut comporter d'autres caractéristiques qui peuvent être prises séparément ou en combinaison, et notamment :
- le flasque peut être solidarisé fixement à son arbre secondaire via une pièce intermédiaire ;
- le moyeu peut comprendre au moins une butée d'arrêt propre à empêcher la translation du manchon associé par rapport à lui sur une distance qui est supérieure à une valeur prédéfinie ;
- le flasque peut comprendre un disque solidarisé fixement à une extrémité du sous-moyeu, sensiblement à 90°. Dans ce cas, il peut également comprendre un pignon fixe monté sur son sous-moyeu entre le disque et le moyeu, et solidarisé en rotation à ce sous-moyeu ;
   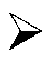 il peut également comprendre une rondelle d'appui placée à une extrémité de son moyeu qui est orientée vers le pignon fixe, et propre à servir d'interface entre son moyeu et ce pignon fixe.

L'invention propose également une boîte de vitesses comprenant au moins un arbre secondaire auquel est couplé au moins un synchroniseur du type de celui présenté ci-avant.

L'invention propose également un véhicule, éventuellement de type automobile, et comprenant une boîte de vitesses du type de celle présentée ci-avant.

D'autres caractéristiques et avantages de l'invention apparaîtront à l'examen de la description détaillée ci-après, et des dessins annexés, sur lesquels :
- la figure 1 illustre schématiquement la coopération étroite entre une dent d'extrémité d'une cannelure interne d'un manchon et un crabot d'une couronne à crabots d'un pignon fou d'une boîte de vitesses,
- la figure 2 illustre schématiquement, dans une vue en coupe longitudinale, une partie d'un axe secondaire d'une boîte de vitesses, auquel sont solidarisés un exemple de réalisation d'un synchroniseur selon l'invention et un pignon fou,
- la figure 3 illustre schématiquement, dans une vue en perspective, certains éléments du synchroniseur de la figure 2 et une couronne à crabots, avant assemblage sur un axe secondaire, et
- la figure 4 illustre schématiquement, dans une vue en perspective, les éléments de synchroniseur de la figure 3 assemblés les uns aux autres et couplés à un pignon fou.

L'invention a notamment pour but de proposer un synchroniseur SB destiné à équiper une boîte de vitesses BV comprenant au moins un arbre secondaire AS.

Dans ce qui suit, on considère, à titre d'exemple non limitatif, que la boîte de vitesses BV est destinée à équiper un véhicule de type automobile, comme par exemple une voiture. Mais une boîte de vitesses BV selon l'invention peut équiper tout type de système, et notamment les véhicules terrestres (quel qu'en soit le type), les véhicules maritimes (ou fluviaux) et certaines installations, éventuellement industrielles.

Sur les figures 1 à 4, la direction X est une direction de translation dite longitudinale.

On a schématiquement représenté sur la figure 2 une toute petite partie d'une boîte de vitesses BV, ici destinée à être couplée à un moteur thermique d'un véhicule via un embrayage.

Bien que cela apparaisse de façon très partielle sur la figure 2, la boîte de vitesses BV comprend, classiquement et notamment, au moins un arbre primaire, au moins un arbre secondaire AS, au moins un synchroniseur SB, au moins une fourchette associée à un synchroniseur SB, et au moins un actionneur de fourchette.

On considère dans ce qui suit, à titre d'exemple non limitatif, que la boîte de vitesses BV est couplée à un embrayage simple. Par conséquent, elle ne comprend qu'un arbre primaire et un arbre secondaire AS. Mais cette boîte de vitesses BV pourrait être à double embrayage (ou DCT).

L'arbre primaire constitue l'entrée de la boîte de vitesses BV. Il est destiné à recevoir le couple moteur via l'embrayage et comprend plusieurs pignons fixes destinés à participer à la définition des rapports (ou vitesses) de la boîte de vitesses BV.

L'arbre secondaire AS constitue la sortie de la boîte de vitesses BV. Il est destiné à recevoir le couple moteur via l'arbre primaire afin de le communiquer à un arbre de transmission auquel il est couplé, et comprend à cet effet plusieurs pignons fous engrenant certains pignons fixes de l'arbre primaire en définissant différents rapports (ou vitesses) de la boîte de vitesses BV. Il est rappelé que lorsque l'on souhaite engager un rapport, il faut solidariser temporairement en rotation un pignon fou à l'arbre secondaire qui le porte.

Cet arbre secondaire AS comprend au moins un synchroniseur SB (et généralement plusieurs (par exemple trois ou quatre)) dont une partie peut être translatée suivant la direction X par une fourchette (de commande) lorsque cette dernière est elle-même translatée suivant la direction X par un actionneur. On notera qu'un actionneur peut déplacer une ou plusieurs fourchettes.

Selon l'invention, chaque synchroniseur SB comprend au moins un flasque FL, un moyeu MO, un manchon (ou baladeur) MA, une bague de synchronisation BS, et un mécanisme d'armement.

Comme illustré sur la figure 2, le flasque FL comprend un sous-moyeu SM qui est solidarisé fixement à l'arbre secondaire AS et qui est muni de cannelures externes CE3. Cette solidarisation fixe peut, par exemple, se faire via une pièce intermédiaire PI qui est elle-même solidarisée fixement à l'arbre secondaire AS. Cette pièce intermédiaire PI est par exemple un roulement qui permet de bloquer en translation le flasque FL et qui assure la rotation du pignon fixe PF2 via les cannelures externe CE3 du sous-moyeu SM.

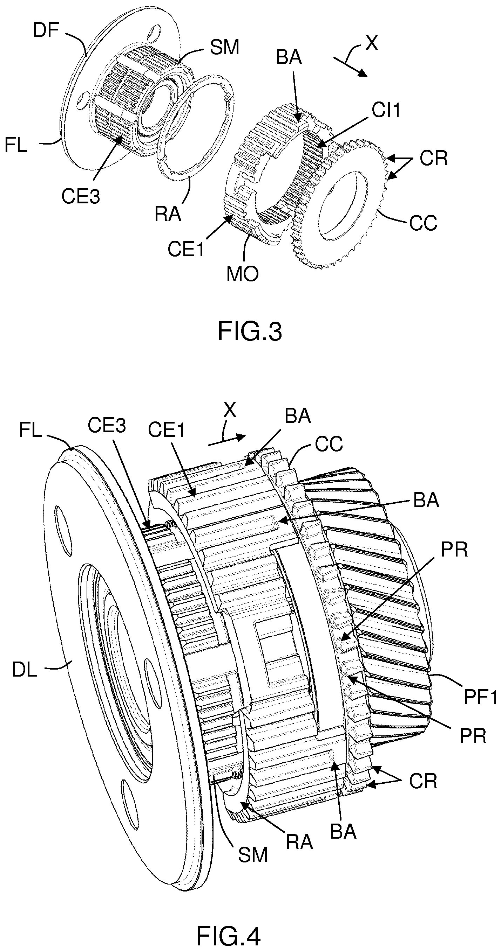

Le moyeu MO est couplé en rotation à l'arbre secondaire AS via le sous-moyeu SM. Comme cela apparaît mieux sur les figures 2 et 3, ce moyeu MO comprend plus précisément des cannelures internes CI1 propres à coopérer avec les cannelures externes CE3 du sous-moyeu SM pour permettre sa translation (ou son coulissement) par rapport à ce dernier (SM), suivant la direction X.

Le manchon (ou baladeur) MA est propre à être translaté par rapport au moyeu MO, suivant la direction X, sous l'action de la fourchette associée. Il comprend à cet effet des cannelures internes CI2 destinées à coopérer avec des cannelures externes CE1 du moyeu MO pour permettre sa translation jusqu'à ce qu'elles (CI2) soient couplées étroitement, de façon garantie, à des crabots CR d'un pignon fou PF1 associé, qui participe à la définition d'au moins un rapport, avec une marge de translation (ou déplacement) minimale mdm, indépendamment de variations dimensionnelles de fabrication au moins du manchon MA et du pignon fou PF1.

Il est rappelé que le couplage étroit précité se fait en plusieurs phases qui, pour certaines d'entre elles, utilisent une bague de synchronisation BS montée sur l'arbre secondaire AS entre une partie du manchon MA et la couronne à crabots CC sur laquelle sont définis les crabots CR et qui est solidarisée fixement au pignon fou PF1.

La bague de synchronisation BS comprend une partie conique femelle qui est propre à être couplée à une partie conique mâle de la couronne à crabots CC du pignon fou PF1, lors d'une phase de synchronisation. Cette dernière consiste à translater légèrement le manchon MA avec la fourchette associée, afin de contraindre au moins un mécanisme d'armement, qui est installé entre sa face interne et une face externe du moyeu MO, à translater la bague de synchronisation BS pour la coupler à la couronne à crabots CC du pignon fou PF1. Le couplage de la bague de synchronisation BS au pignon fou PF1 (via sa couronne à crabots CC) est destiné à synchroniser la vitesse de rotation de ce pignon fou PF1 sur celle de l'arbre secondaire AS qui le porte.

Après cette phase de synchronisation survient une phase généralement dite de « dévirage », pendant laquelle on poursuit la translation du manchon MA avec la fourchette associée, afin de provoquer un décalage angulaire de la bague de synchronisation BS.

Enfin, après cette phase de dévirage survient une phase généralement dite de « crabotage », pendant laquelle on termine la translation du manchon MA avec la fourchette associée, afin de coupler étroitement, de façon garantie, ses cannelures internes CI2 aux crabots CR de la couronne à crabots CC du pignon fou PF1. Le couplage du manchon MA au pignon fou PF1 est destiné à solidariser temporairement en rotation ce dernier (PF1) à l'arbre secondaire AS qui le porte.

On entend ici par « couplage étroit » le fait que certains renfoncements dits « anti-lâcher » RE des dents d'extrémité des cannelures internes CI2 du manchon MA logent des protubérances PR définies à l'intersection entre des dièdres constituant les crabots CR de la couronne à crabots CC comme illustré sur la figure 1.

La marge de translation (ou déplacement) minimale mdm est définie comme la distance minimale à respecter entre l'extrémité avant d'un renfoncement anti-lâcher RE et l'intersection des dièdres d'un crabot CR, lorsque le rapport est engagé et que le manchon MA a recouvert la couronne à crabots CC en fin de phase de crabotage.

On comprendra que le jeu de translation (suivant X), offert par la liaison coulissante cannelée entre le moyeu MO et le sous-moyeu SM, permet de venir plaquer efficacement ce moyeu MO sur la couronne à crabots CC pour obtenir la course nécessaire à l'engagement complet du nouveau rapport sans risque d'échapper à l'anti-lâcher, tout en évitant le blocage ou coincement du doigt de la fourchette dans l'actionneur. La variation de jeu de fin de course étant gommée par la liaison coulissante cannelée, la chaine de cotes minimales en prise se trouve réduite et indépendante des variations dimensionnelles de fabrication des pièces qui la constituent (manchon MA, bague de synchronisation BS et couronne à crabots CC du pignon fou PF1), ce qui permet de l'optimiser facilement, et donc de réaliser les pièces facilement, avec des formes (très) compliquées, sans qu'il faille procéder à des usinages complémentaires.

On notera, comme illustré sur les figures 2 à 4, que le moyeu MO comprend préférentiellement au moins une butée d'arrêt BA (et de préférence plusieurs) propre(s) à empêcher la translation du manchon MA par rapport à lui sur une distance qui est supérieure à une valeur prédéfinie. Cette dernière est choisie de manière à empêcher que le manchon MA dépasse la couronne à crabots CC dans la phase de crabotage, afin d'éliminer tous risques d'inférences avec les dents du pignon fou PF1. Comme illustré non limitativement sur les figures 3 et 4, chaque butée d'arrêt BA peut être définie par une paroi joignant, sensiblement perpendiculairement, deux extrémités prolongées de deux cannelures externes CE1 voisines du moyeu MO.

On notera également, comme illustré non limitativement sur les figures 2 à 4, que le flasque FL peut comprendre un disque DF solidarisé fixement à une extrémité du sous-moyeu SM, sensiblement à 90°. Dans ce cas, le synchroniseur SB peut également comprendre un pignon fixe PF2 monté sur le sous-moyeu SM entre le disque DF et le moyeu MO, et solidarisé en rotation au sous-moyeu SM. On comprendra que ce disque DF est destiné à empêcher les translations du pignon fixe PF2 selon un sens qui est opposé au pignon fou PF1. Le disque DF peut également servir à fixer une autre pièce faisant éventuellement partie du synchroniseur SB, comme illustré non limitativement sur la figure 2.

Le synchroniseur SB peut, également et éventuellement, comprendre une rondelle ou demi-rondelle d'appui RA placée à une extrémité du moyeu MO qui est orientée vers le pignon fixe PF2, et propre à servir d'interface entre le moyeu MO et le pignon fixe PF2,comme illustré non limitativement sur la figure 2. Cette rondelle ou demi-rondelle d'appui RA sert à bloquer en translation le pignon fixe PF2.

L'invention offre plusieurs avantages, parmi lesquels :
- une position précise de la fin de course du manchon du fait que la variation de jeu de fin de course est gommée par la liaison coulissante cannelée,
- une possibilité de rendre les boîtes de vitesses plus compactes,
- une réalisation plus facile de la chaîne de côtes,
- une indépendance vis-à-vis des fabricants de certaines pièces, comme par exemple les couronnes à crabots qui sont non soudées et coulissantes sur des cannelures.

## Revendications

1. Synchroniseur (SB) pour une boîte de vitesses (BV) comprenant au moins un arbre secondaire (AS), ledit synchroniseur (SB) comportant un moyeu (MO) couplé en rotation audit arbre secondaire (AS) et un manchon (MA) comprenant des cannelures internes (CI2) et propre à être translaté par rapport audit moyeu (MO) afin que ses cannelures internes (CI2) soient couplées étroitement à des crabots (CR) d'un pignon fou (PF1) participant à la définition d'au moins un rapport, **caractérisé en ce qu'**il comprend en outre un flasque (FL) comportant un sous-moyeu (SM) solidarisé audit arbre secondaire (AS) et muni de cannelures externes (CE3), et **en ce que** ledit moyeu (MO) comprend des cannelures internes (CI1) propres à coopérer avec lesdites cannelures externes (CE3) dudit sous-moyeu (SM) pour permettre une translation par rapport à ce dernier (SM) propre à garantir ledit couplage étroit desdites cannelures internes (CI2) du manchon (MA) auxdits crabots (CR) avec une marge de translation minimale, indépendamment de variations dimensionnelles de fabrication desdits manchon (MA) et pignon fou (PF1).

2. Synchroniseur selon la revendication 1, **caractérisé en ce que** ledit flasque (FL) est solidarisé fixement audit arbre secondaire (AS) via une pièce intermédiaire (PI).

3. Synchroniseur selon l'une des revendications 1 et 2, **caractérisé en ce que** ledit moyeu (MO) comprend au moins une butée d'arrêt (BA) propre à empêcher la translation dudit manchon (MA) par rapport à lui sur une distance supérieure à une valeur prédéfinie.

4. Synchroniseur selon l'une des revendications 1 à 3, **caractérisé en ce que** ledit flasque (FL) comprend un disque (DF) solidarisé fixement à une extrémité dudit sous-moyeu (SM), sensiblement à 90°, et **en ce qu'**il comprend en outre un pignon fixe (PF2) monté sur ledit sous-moyeu (SM) entre ledit disque (DF) et ledit moyeu (MO), et solidarisé en rotation audit sous-moyeu (SM).

5. Synchroniseur selon la revendication 4, **caractérisé en ce qu'**il comprend en outre une rondelle d'appui (RA) placée à une extrémité dudit moyeu (MO) qui est orientée vers ledit pignon fixe (PF2), et propre à servir d'interface entre ledit moyeu (MO) et ledit pignon fixe (PF2).

6. Boîte de vitesses (BV) comprenant au moins un arbre secondaire (AS), **caractérisée en ce qu'**elle comprend en outre au moins un synchroniseur (SB) selon l'une des revendications précédentes, couplé audit arbre secondaire (AS).

7. Véhicule, **caractérisé en ce qu'**il comprend une boîte de vitesses (BV) selon la revendication 6.

8. Véhicule selon la revendication 7, **caractérisé en ce qu'**il est de type automobile.

## Patentansprüche

1. Synchronisierungskupplungsnabe (SB) für ein Schaltgetriebe (BV), das mindestens eine Sekundärwelle (AS) umfasst, wobei die Synchronisierungskupplungsnabe (SB) eine Nabe (MO) umfasst, die in Drehung mit der Sekundärwelle (AS) gekoppelt ist, und eine Hülse (MA), die interne Kerbverzahnungen (CI2) umfasst und geeignet ist, bezüglich der Nabe (MO) verlagert zu werden, damit ihre internen Kerbverzahnungen (CI2) eng mit Kuppelmuffenklauen (CR) eines Freilaufritzels (PF1) gekoppelt sind, das an der Definition mindestens eines Gangs beteiligt ist, **dadurch gekennzeichnet, dass** sie außerdem einen Flansch (FL) umfasst, der eine Subnabe (SM) umfasst, die mit der Sekundärwelle (AS) fest verbunden und mit externen Kerbverzahnungen (CE3) versehen ist, und dass die Nabe (MO) interne Kerbverzahnungen (CI1) umfasst, die geeignet sind, mit den externen Kerbverzahnungen (CE3) der Subnabe (SM) zusammenzuwirken, eine Translation bezüglich dieser Letzteren (SM) zu erlauben, die geeignet ist, um das enge Koppeln der internen Kerbverzahnungen (CI2) der Hülse (MA) mit den Kuppelmuffenklauen (CR) mit einer minimalen Translationsmarge unabhängig von maßlichen Fertigungsvariationen der Hülse (MA) und des Freilaufritzels (PF1) zu garantieren.

2. Synchronisierungskupplungsnabe nach Anspruch 1, **dadurch gekennzeichnet, dass** der Flansch (FL) fest an der Sekundärwelle (AS) über ein Zwischenteil (PI) verbunden ist.

3. Synchronisierungskupplungsnabe nach einem der Ansprüche 1 und 2, **dadurch gekennzeichnet, dass** die Nabe (MO) mindestens einen Anschlag (BA) umfasst, der geeignet ist, die Translation der Hülse (MA) bezüglich zu ihm auf einer Entfernung, die größer ist als ein vordefinierter Wert, zu verhindern.

4. Synchronisierungskupplungsnabe nach einem der Ansprüche 1 bis 3, **dadurch gekennzeichnet, dass** der Flansch (FL) eine Scheibe (DF) umfasst, die mit einem Ende der Subnabe (SM) im Wesentlichen an 90° fest verbunden ist, und dass sie außerdem ein stationäres Ritzel (PF2) umfasst, das auf der Subnabe (SM) zwischen der Scheibe (DF) und der Nabe (MO) montiert und in Drehung mit der Subnabe (SM) fest verbunden ist.

5. Synchronisierungskupplungsnabe nach Anspruch 4, **dadurch gekennzeichnet, dass** sie außerdem eine Auflagescheibe (RA) umfasst, die an einem Ende der Nabe (MO), die zu dem stationären Ritzel (PF2) ausgerichtet und geeignet ist, als Schnittfläche zwischen der Nabe (MO) und dem stationären Ritzel (PF2) zu dienen, platziert ist.

6. Schaltgetriebe (BV), das mindestens eine Sekundärwelle (AS) umfasst, **dadurch gekennzeichnet, dass** es außerdem mindestens eine Synchronisierungskupplungsnabe (SB) nach einem der vorstehenden Ansprüche, die mit der Sekundärwelle (AS) gekoppelt ist, umfasst.

7. Fahrzeug, **dadurch gekennzeichnet, dass** es ein Schaltgetriebe (BV) nach Anspruch 6 umfasst.

8. Fahrzeug nach Anspruch 7, **dadurch gekennzeichnet, dass** es vom Automobiltyp ist.

## Claims

1. A synchromesh (SB) for a gearbox (BV) including at least one secondary shaft (AS), said synchromesh (SB) comprising a hub (MO) coupled in rotation to said secondary shaft (AS) and a sleeve (MA) including internal splines (CI2) and suitable to be translated with respect to said hub (MO) so that its internal splines (CI2) are closely coupled to dogs (CR) of an idling pinion (PF1) participating in the definition of at least one ratio, **characterized in that** it further includes a flange (FL) comprising a sub-hub (SM) secured to said secondary shaft (AS) and provided with external splines (CE3), and **in that** said hub (MO) includes internal splines (CI1) suitable to cooperate with said external splines (CE3) of said sub-hub (SM) to permit a translation with respect to the latter (SM) suitable to guarantee said close coupling of said internal splines (CI2) of the sleeve (MA) to said dogs (CR) with a minimal margin for translation, irrespective of dimensional variations in the manufacture of said sleeve (MA) and idling pinion (PF1) .

2. The synchromesh according to Claim 1, **characterized in that** said flange (FL) is fixedly secured to said secondary shaft (AS) via an intermediate part (PI).

3. The synchromesh according to one of Claims 1 and 2, **characterized in that** said hub (MO) includes at least one stop (BA) suitable to prevent the translation of said sleeve (MA) with respect thereto over a distance greater than a predefined value.

4. The synchromesh according to one of Claims 1 to 3, **characterized in that** said flange (FL) includes a disc (DF) fixedly secured to an end of said sub-hub (SM), substantially at 90°, and **in that** it further includes a fixed pinion (PF2) mounted on said sub-hub (SM) between said disc (DF) and said hub (MO), and secured in rotation to said sub-hub (SM).

5. The synchromesh according to Claim 4, **characterized in that** it further includes a support washer (RA) placed at an end of said hub (MO) which is oriented towards said fixed pinion (PF2), and suitable to serve as an interface between said hub (MO) and said fixed pinion (PF2) .

6. A gearbox (BV) including at least one secondary shaft (AS), **characterized in that** it further includes at least one synchromesh (SB) according to one of the preceding claims, coupled to said secondary shaft (AS) .

7. A vehicle, **characterized in that** it includes a gearbox (BV) according to Claim 6.

8. A vehicle according to Claim 7, **characterized in that** it is of the automobile type.
